# EUROPEAN PATENT SPECIFICATION

(11) **EP 2 234 298 B1**
(45) Date of publication and mention of the grant of the patent: **14.06.2017**
(21) Application number: 07845892.4
(22) Date of filing: 11.12.2007
(51) Int. Cl.: H04W 56/00, H04W 74/08

(54) **A TRANSMITTING METHOD AND SYSTEM FOR SHORT PHYSICAL RANDOM ACCESS CHANNEL BASED ON TIME DIVISION DUPLEX SYSTEM**
ÜBERTRAGUNGSVERFAHREN UND SYSTEM FÜR DEN KURZEN PHYSISCHEN DIREKTZUGRIFFSKANAL AUF DER BASIS EINES ZEITDUPLEXSYSTEMS
PROCÉDÉ DE TRANSMISSION ET SYSTÈME POUR CANAL PHYSIQUE COURT D'ACCÈS ALÉATOIRE BASÉ SUR UN SYSTÈME DE DUPLEXAGE PAR RÉPARTITION DANS LE TEMPS

(43) Date of publication of application: 29.09.2010
(73) Proprietor: ZTE Corporation, Shenzhen, Guangdong 518057 (CN)
(72) Inventor: YU, Bin, Guangdong 518057 (CN)
(74) Representative: V.O.
(86) International application number: PCT/CN2007/003536
(87) International publication number: WO 2009/073999

(56) References cited:
- WO-A2-01/67620
- CN-A- 1 889 717
- CN-A- 101 043 256
- CMCC ET AL: "Way Forward on LTE TDD Frame Structure", 3GPP DRAFT; R1-075020, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Korea; 20071106, 6 November 2007 (2007-11-06), XP050108467, [retrieved on 2007-11-06]
- ERICSSON: "RACH for frame structure type 2", 3GPP DRAFT; R1-073737, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20070815, 15 August 2007 (2007-08-15), XP050107326, [retrieved on 2007-08-15]
- "3rd Generation Partnership Project; Technical Specification Group Radio Access Network; Evolved Universal Terrestrial Radio Access (E-UTRA); Physical channels and modulation (Release 8)", 3GPP STANDARD; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 September 2007 (2007-09-01), pages 1-50, XP050377532,

## Description

### Field of the Invention

The present invention relates to the transmission of the random access signal in the mobile communication system, and in particular to a transmitting method and system for the short physical random access channel based on the time division duplex (TDD) system.

### Background of the Invention

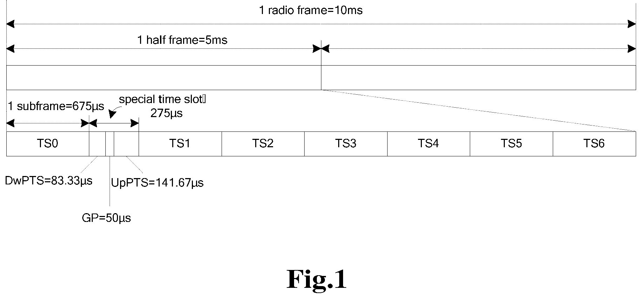

The 3G Long Term Evolution (LTE) system of the Third Generation Partnership Project (3GPP) defined two types of frame structures before the RAN1#50bis Meeting, wherein the second type of frame structure (as shown in Fig.1), corresponding to the long term evolution of the Time Division-Synchronous Code Division Multiple Access (TD-SCDMA for short), employs Time Division Duplex (TDD) mode.

In the second type of frame structure, subframe 0 is dedicated to transmit downlink data; the first n subframes of subframes 1-6 are used to transmit uplink data, and the last 6-n subframes are used to transmit downlink data (1≤n≤6); the special time slot DwPTS (Downlink Pilot Time Slot) is used to transmit downlink synchronous information, GP (Guard Period) is the guard band between downlink and uplink, UpPTS (Uplink Pilot Time Slot) is used to transmit random access information. At the same time, in order to support cells with large coverage, the first m subframes of subframes 1-6 can also be used to transmit the random access information, at this time, in the remaining subframes, the first n subframes can be used as uplink subframes for transmitting the uplink data, and the last 6-m-n subframes can be used as downlink subframes for transmitting the downlink data.

At this time, the second type of frame structure of the LTE system is advantageous in enabling the LTE system and the TD-SCDMA system to realize adjacent frequency coexistence conveniently, that is to say, as long as the switching ratio of uplink/downlink time slots of the LTE system is the same as that of the TD-SCDMA system, the interference between the two systems can be avoided effectively. However, there are apparent disadvantages in the above frame structure, for example:
(1) It is very inflexible in setting the GP. In this system, the GP time slot is equal to 50µs, and has to be enlarged when the system needs to support a larger coverage. The method for enlarging the GP is reserving the UpPTS time slot as the GP time slot, or reserving the UpPTS time slot and TS1 as the GP time slots. It should be noted that the symbols of the TS1 can not be partly reserved as the GP, because the uplink control channel is generally located at the two sides of the system bandwidth and has duration of one time slot. If part of the symbols of the TS1 (time slot) is reserved as the GP, the receiving performance of the uplink control channel will be severely deteriorated. the DwPTS and part of the symbols of TS0 can also not be reserved as the GP time slots, because P-SCH signal is transmitted on the DwPTS, and S-SCH signal is transmitted on the last symbol of the TS0, if the DwPTS and part of the symbols of the TS0 are reserved as the GP, users may not be able to receive the P/S-SCH signal which is the signal to be firstly received by the user when the user accesses to the system, and the user can not access the system in case of not correctly receiving the P/S-SCH signal.
(2) The P/S-SCH signal is located at the boundary where the downlink time slot switches to the uplink time slot, as discussed above, the P/S-SCH signal is the signal to be firstly received by the user when the user accesses to the system, thus the power of the P/S-SCH signal is normally greater than that of other signals, in a cell environment, the receiving performance of uplink time slot signal will be severely affected due to the greater power of the P/S-SCH signal.
(3) The DwPTS time slot has low utilization efficiency. When the system has a comparatively broad bandwidth, the utilization efficiency of the DwPTS time slot will be comparatively low because only the P-SCH signal is transmitted at the middle bandwidth (1.25 MHz) of the system bandwidth.
(4) The duration of a subframe is shorter than that of the first type of frame structure, and the uplink coverage is smaller than that of the first type frame structure.
(5) The system overhead is greater than that of the first type of frame structure and thus is low in frequency spectrum utilization efficiency.

In order to solve the above problems, at the 3GPP RAN1#50bis Meeting, a new frame structure suitable for the TDD mode of the LTE system is passed, which will be defined as a new Type 2 frame structure, the sole frame structure of the TDD mode of the LTE system.

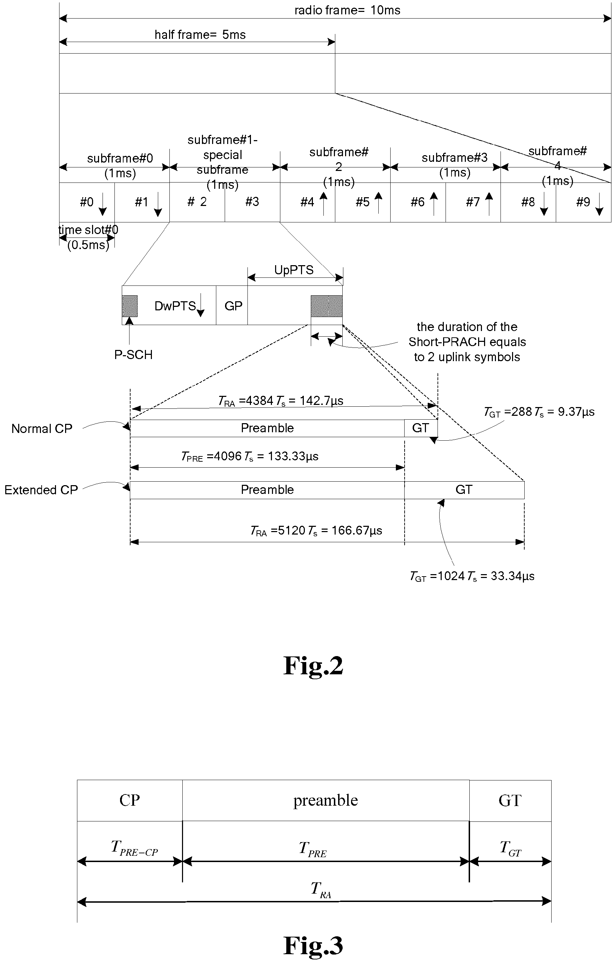

As shown in Fig.2 (for convenience of description, the frame structure is referred to as "New Frame Structure" hereinafter, and *T*ₛ = 1/(15000 × 2048) second will be used as the time unit). In the New Frame Structure, each radio frame with a time length of 307200×*T*ₛ =10 ms is divided into two half frames of 5ms, each of which comprises 5 subframes of 1ms (numbered from 0 to 4), apart from a special subframe, each remaining subframe comprises two time slots of 0.5ms. In addition, the New Frame Structure also comprises the following features:
(1) The number of the symbols and the Cyclic Prefix (CP) length in each subframe are equal to those in the first type of frame structure. For the short CP (normal CP) with a length of 160*T*ₛ = 5.21µs and 144*T*ₛ = 4.69µs, each time slot of 0.5ms comprises 7 uplink/downlink symbols, wherein the CP length of the first symbol is 5.21µs, and the CP length of the remaining 6 symbols is 4.69µs; and for the long CP (extended CP) with a length of 512*T*ₛ = 16.67µs, each time slot comprises 6 uplink/downlink symbols.
(2) Subframe 0 is dedicated to downlink transmission;
(3) Subframe 1 is a special subframe, comprising 3 special time slots respectively being the DwPTS, the GP, and the UpPTS. For the above 3 special time slots, under the constraint of a total duration of 1ms, the duration of each time slot can be configured, and the durations of individual special time slots are integer times of the duration of the uplink/downlink symbol. The duration of the uplink/downlink symbol comprises the duration of the modulation signal of 2048 *T*ₛ = 66.67µs and the duration of the employed CP.

Wherein, in the above mentioned 3 special time slots:
The DwPTS is used for downlink transmission, at least one downlink OFDM (Orthogonal Frequency Division Multiplexing) symbol being used to transmit Primary-Synchronization Channel (P-SCH for short), and when the DwPTS comprises a plurality of the OFDM symbols, the P-SCH is arranged at the first OFDM symbol (as shown in Fig.2), other idle resources may be used to send other downlink resources.

The GP is a guard period, transmitting no data;
The UpPTS is used for uplink transmission, and to transmit other uplink information including random access signal, reference signal and data, except for uplink control signaling.

Random access supports long and short physical random access channels: the short physical random access channel (Short-PRACH), whose preamble is shorter, transmitted on the UpPTS, occupies 1.25MHz of the system bandwidth, is only suitable for cells with small coverage, and the duration of the Short-PRACH is equal to that of 2 uplink symbols (as shown in Fig.2); similar to the first type of frame structure, the long physical random access channel is transmitted on the uplink subframe of 1ms and is able to support cells with larger coverage.

As well known, the cell coverage capability of the LTE TDD system relates not only to the size of the GP size and the length of the Preamble, but also to the guard time (GT) in the Packet Random Access Channel (PRACH). In the New Frame Structure, the Short-PRACH is defined to occupy 2 uplink symbols in the UpPTS, different from the random access channel of the first type of subframe, the duration of the Short-PRACH channel is not fixed and varies according to the type of the cyclic prefix, which results in that the cell coverage capability possibly supported by the Short-PRACH is different in the situation of the Short/Long CP (Normal/Extended CP), thus certain difficulty occurs to the system design, that is to say, in case of the Normal CP, the length of the preamble is 4096 *T*ₛ = 133.33µs, the length of the GT is 288 *T*ₛ = 9.37µs, and theoretically, the maximum cell radius being supported is 1.8km; in case of the Extended CP, the length of the preamble is 4096 *T*ₛ =133.33 µs, the length of the GT is 1024 *T*ₛ = 33.34µs, and theoretically, the maximum cell radius being supported is 5km.

In addition, it is obvious that the inconsistency between the durations in the cases of the Short-RACH extended/normal CP will bring forth a certain complexity and system overhead to the transmission of the Short-PRACH in the UpPTS. For example, when the Short-PRACH is transmitted at the first two symbols of the UpPTS; in case of the normal CP, the Short-PRACH should be transmitted in advance by a certain time (Time Advance) compared to the beginning of the UpPTS, a portion of time of the GP is occupied to extend the GT so as to realize a coverage equivalent to that of the Extended CP, while the uplink subframe and the UpPTS needs a certain time advance to create a GT for uplink/downlink switch. Obviously, a user equipment (UE) needs to recognize the two different time advances respectively, which brings forth a certain complexity to random access; when the Short-PRACH is transmitted at the last two symbols of the UpPTS, if the duration of the UpPTS is greater than 3 uplink symbols, the 1.25M band, which is at the same location as the frequency band of the Short-PRACH, of the uplink symbol prior to the Short-PRACH needs to be idle for the time advance of the Short-PRACH so as to extend the GT in case of the Normal CP, which not only wastes resources but also brings forth a certain complexity to the system resource distribution (because resources need to be idled for the Short-PRACH).

As discussed above, it is inevitable that there are problems such as system design difficulty, higher complexity in the Short-PRACH transmission, greater system overhead, and high complexity in the system resource distribution in the above transmitting method for the random access channel. Thus, it is desirable to design a new transmitting method for the short random access channel aiming at the New Frame Structure.

As background files, 3GPP draft "Way Forward on LTE TDD Frame Structure" (R1-075020, EPO reference XP050108467), 3GPP draft "RACH for frame structure type 2" (R1-073737, EPO reference XP050107326) and 3GPP standard "3rd Generation Partnership Project; Technical Specification Group Radio Access Network; Evolved Universal Terrestrial Radio Access (E-UTRA); Physical channels and modulation (Release 8)" (3GPP TS 36.211, EPO reference XP050377532) also have shown above problem.

### Summary of the Invention

Considering at least one problem of the problems, such as system design difficulty, higher complexity in transmitting, greater system overhead, and higher complexity in system resource distribution due to the duration inconsistency of the Short-RACH in case of extended/normal CP in the transmitting method for the Short Random Access Channel with the New Frame Structure, the present invention is provided, which aims at providing a transmitting method and system for the short physical random access channel based on the TDD system.

According to one aspect of the present invention, a transmitting method for the short physical random access channel based on the TDD system is provided, wherein an uplink special time slot exists in the time division duplex system, and the uplink special time slot may be used for bearing the short physical random access channel.

In the transmitting method for the short physical random access channel based on the TDD system according to the present invention, the short physical random access channel is transmitted on the uplink special time slot, and the durations of the short physical random access channel are made to be the same in case of the uplink special time slot employing a normal cyclic prefix or an extended cyclic prefix.

Preferably, the operation making the durations of the short physical random access channel the same in case of the uplink special channel employing a normal cyclic prefix or an extended cyclic prefix comprises: making the duration of the short physical random access channel equal to the sum of the duration of the preamble, the duration of cyclic prefix attached to the preamble, and the guard time, wherein in the case that the preamble does not have attached cyclic prefix, the duration of the cyclic prefix attached to the preamble is 0.

Preferably, the durations of the preamble are equal no matter the uplink special time slot employs the normal cyclic prefix or the extended cyclic prefix, and the durations of the guard time are also equal no matter the uplink special time slot employs the normal cyclic prefix or the extended cyclic prefix.

Preferably, the sum of the duration of the downlink special time slot, the duration of the uplink special time slot, and the duration of the guard period is 1ms.

Further preferably, the duration of the short physical random access channel is not more than the duration of the uplink special time slot.

According to another aspect of the present invention, a transmitting system for the short physical random access channel based on the TDD system is provided, wherein an uplink special time slot exists in the time division duplex system, and the uplink special time slot may be used for bearing the short physical random access channel.

The transmitting system for the short physical random access channel based on the TDD system according to the present invention comprises: a setting module, configured to set the duration of the short physical random access channel, wherein the setting module sets the durations of the short physical random access channel to be the same in case of the uplink special time slot employing a normal cyclic prefix or an extended cyclic prefix; a transmitting module, configured to transmit the short physical random access channel on the uplink special time slot.

In the above system, preferably, the setting module sets the duration of the short physical random access channel equal to the sum of the duration of the preamble, the duration of cyclic prefix attached to the preamble, and the guard time, wherein in the case that the preamble does not have attached cyclic prefix, the duration of the cyclic prefix attached to the preamble is 0.

Preferably, the setting module sets the durations of the preamble to be equal no matter the uplink special time slot employs the normal cyclic prefix or the extended cyclic prefix, and sets the durations of the guard time to be also equal no matter the uplink special time slot employs the normal cyclic prefix or the extended cyclic prefix.

Further preferably, the setting module sets the sum of the duration of the downlink special time slot, the duration of the uplink special time slot, and the duration of the guard period to be 1ms, and sets the duration of the short physical random access channel not more than the duration of the uplink special time slot.

In the present invention, by making the duration of the Short-PRACH irrelevant to the extended/normal CP of the UpPTS, that is to say, the design of the Short-PRACH keeps consistent and the position of it keeps fixed without varying with the change of the duration of the UpPTS, the reliability of the Short-PRACH can be improved and detection can be facilitated; in addition, the terminal only needs one time advance for the whole uplink (including UpPTS) to produce the GT for the switching from uplink to downlink, without any additional time advance of the Short-PRACH thereafter, thus the resource preceding the Short-PRACH is not required to be idle, therefore the complexity for random access and the overhead can be reduced, and thus the system design complexity and system resource distribution complexity can be reduced.

Other features and advantages of the present invention will be described in the following description and partly become obvious from the description, or be understood by implementing the present invention. The objects and other advantages of the present invention can be realized and obtained through the structures indicated by the description, claims and drawings.

### Brief Description of the Drawings

Drawings are provided for the further understanding of the present invention and form part of the specification, the drawings, together with embodiments of the present invention, are used to explain the present invention rather than limit the present invention, wherein,
Fig.1 is a schematic view of the second type of frame structure of the LTE system according to relevant art;
Fig.2 is a schematic view of the "new frame structure" according to relevant art;
Fig.3 is a schematic view of the PRACH structure according to an embodiment of the present invention;
Fig.4 is a schematic view of Embodiment 1 of the transmitting method for the Short-PRACH based on the TDD system according to the present invention;
Fig.5 is a schematic view of Embodiment 1 of the transmitting method for the Short-PRACH based on the TDD system according to the present invention;
Fig.6 is a block diagram of the transmitting system for the Short-PRACH based on the TDD system according to an embodiment of the present invention.

### Detailed Description of the Embodiments

Fig.2 is a schematic view of the "new frame structure" according to related art. As discussed above, in case of the "New Frame Structure", the Short-PRACH is transmitted in two uplink symbols of the UpPTS (uplink special slot), in case of a Normal CP, the duration thereof is *T_{RA}* = 4384*Tₛ* = 142.7µs, wherein the length of preamble, *T_{PRE}*, is 4096 *T*ₛ = 133.33µs, the length of GT, *T_{GT}*, is 288 *T*ₛ = 9.37 µs ; in case of an Extended CP, the duration thereof is *T_{RA}* = 5120*Tₛ* = 166.67µs, wherein the length of the preamble, *T_{PRE}*, is 4096 *T*ₛ = 133.33µs, the length of the GT, *T_{GT}*, is 1024 *T*ₛ = 33 .34µs. Since the *T_{GT}* in the Short-PRACH is different in cases of the Extended/Normal CP, cell coverage capability is different, which may bring forth a certain complexity and system overhead to the random access of the cell with small coverage.

Based on above discussion, the embodiments of the present invention provide a transmitting method and system for the Short-PRACH based on the TDD system, wherein no matter the UpPTS employs a Normal CP or an Extended CP, the Short-PRACH in both cases employ the same durations. That's to say, the duration of the Short-PRACH is a constant independent of the CP length employed by the UpPTS.

A detailed description is given to the preferred embodiments of the invention with reference to the accompanying drawings. The preferred embodiment of the present invention is described for the purpose of illustration, not for limiting the present invention.

### Method Embodiments

According to an embodiment of the present invention, a transmitting method for the Short-PRACH based on the TDD system is provided for transmitting the Short-PRACH signal of small coverage cell, wherein an uplink special time slot exists in the time division duplex system and the uplink special time slot may be used for bearing the short physical random access channel.

In the above method, the short physical random access channel is transmitted on the uplink special time slot, and the durations of the short physical random access channel are made to be the same in case of the uplink special time slot employing a normal cyclic prefix or an extended cyclic prefix.

Wherein, the duration of the Short-PRACH, *T_{RA}*, relates to the duration of the preamble, *T_{PRE}*, the duration of the CP attached to the preamble, *T_{PRE-CP}*, and the GT, *T_{GT}*. Preferably, *T_{RA}* = *T_{PRE-CP}* + *T_{PRE}* + *T_{GT}* (as shown in Fig.3); wherein, *T_{PRE-CP}* may be 0, i.e., the preamble does not have to attach a CP.

Preferably, *T_{PRE}* is the same no matter the UpPTS employs the Normal CP or the Extended CP, and *T_{GT}* is also the same no matter the UpPTS employs the Normal CP or the Extended CP.

Preferably, the sum of the duration of the UpPTS, *T_{UpPTS}*, the duration of the DwPTS, *T_{DwPTS}*, and the duration of the GP, *T_{GP}*, is 1ms, i.e., *T_{DwPTS}* + *T_{UpPTS}* + *T_{GP}* = 1*ms*.

Wherein, the duration of the UpPTS, *T_{UpPTS}*, is not less than the duration of the Short-PRACH, *T_{RA}*, i.e., *T_{UpPTS}* >= *T_{RA}*.

In addition, the duration of the UpPTS, *T_{UpPTS}*, and the duration of the GP, *T_{GP}*, are not limited to be integer times of the duration of one uplink symbol, *T_{UL-Symbol}*.

Embodiments of the present invention will be further described in connection with examples.

### Example 1

In the "New Frame Structure" of the LTE, subframe #1 is a special frame with a time length of 1ms, for the Normal CPs with a time length of 160 *T*ₛ = 5.21µs and 144*T*ₛ = 4.69µs, subframe #1 comprises 14 uplink/downlink symbols, wherein the CP of the first symbol has a time length of 5.21µs, the CPs of other 6 symbols have a time length of 4.69µs; for the Extended CP with a time length of 512*T*ₛ =16.67µs, subframe #1 comprises 12 uplink/downlink symbols. Wherein, the durations of 3 special time slots, DwPTS, GP and UpPTS can be configured, so as to meet the requirement of the adjacent frequency coexistence with the TD-SCDMA, and support the flexibility of the length of the GPs required in the cells of various coverage capabilities.

When a cell is a small coverage one (it is assumed that a cell with a radius less than 5 km is a small coverage cell), in the cases of both the Extended CP and the Normal CP, the Short-PRACH has the same duration of *T_{RA}* = 5120*Tₛ* = 166.67µs, and the Short-PRACH occupies the last 5120 *Tₛ* = 166.67µs of the UpPTS. Wherein, the time length of the preamble, *T_{PRE}*, is 4096*T*ₛ = 133.33µs, the time length of the GT, *T_{GT}*, is 1024*T*ₛ = 33.34µs, and *T*_{*PRE*-*CP*} = 0, i.e., the preamble has no CP.

In addition, the distribution of the LTE resource is generally integer times of uplink/downlink symbol duration in the time domain, thus the duration of the UpPTS minus that of the Short-PRACH is integer times of an uplink symbol, i.e., *T_{UpPTS}* = *T_{RA}* + *n * T*_{*UL*-*Symbol*}, wherein *T*_{*UL*-*Symbol*} is the duration of one uplink symbol, n is a positive integer or may be 0. The duration of *T_{UL-Symbol}* comprises the duration of uplink modulation signal, 2048 *T*ₛ = 66.67µs, and the duration of the CP employed by the uplink symbol in the UpPTS. Further, for the convenience of designing information transmission on the DwPTS, the duration of the DwPTS is restricted to integer times of the duration of downlink symbol, i.e., *T_{DwPTS}* = *m * T_{DL-Symbol}*, wherein *T_{DL-Symbol}* is the duration of one uplink symbol, m is a positive integer or may be 0. The duration of *T_{DL-Symbol}* comprises the duration of downlink modulation signal, 2048 *T*ₛ = 66.67µs, and the duration of the CP employed by each uplink symbol in the UpPTS. Further, the durations of the 3 special time slots can be configured through configuring the values of n and m, so as to meet the requirements of TD-SCDMA adjacent frequencies coexisting and GP flexibility.

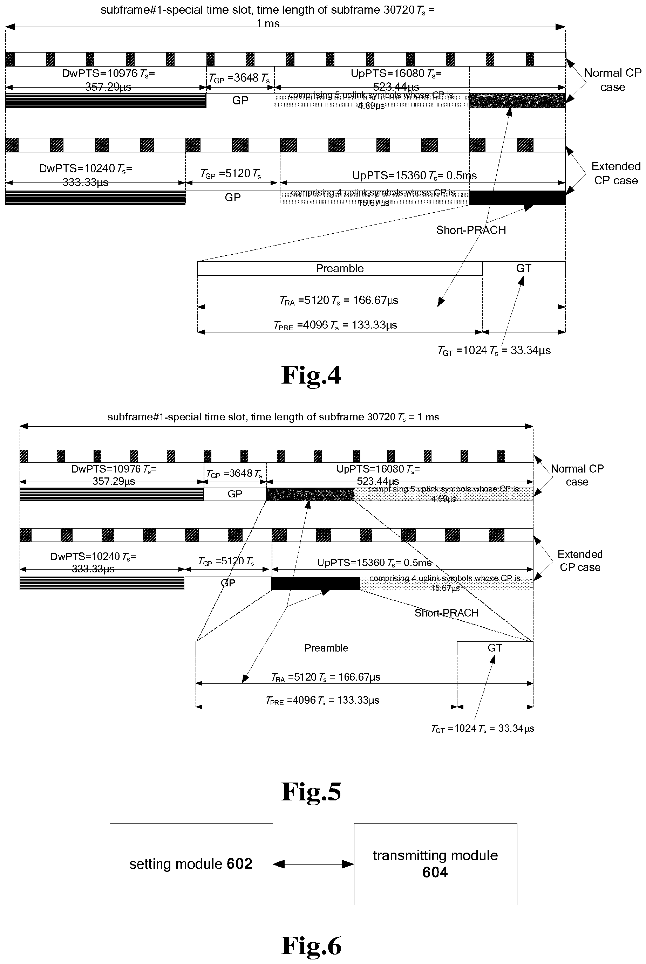

Fig.4 shows an example of being able to adjacent-frequency-coexist with the TD-SCDMA network, whose ratio of uplink/downlink is 2:5. In the Normal CP case, besides the Short-PRACH, the UpPTS further comprises 5 uplink symbols employing the Normal CP with 144*T*ₛ = 4.69µs, while the DwPTS comprises one downlink symbol employing the CP with 160*T*ₛ = 5.21µs and 4 downlink symbols employing the CP with 144*T*ₛ = 4.69µs, herein, *T_{UpPTS}* = 16080*Tₛ* = 523.44µs, *T_{DwPTS}* = 10916*T*ₛ = 357.29µs. In the Extended CP case, besides the Short-PRACH, the UpPTS further comprises 4 uplink symbols employing the CP with 512*T*ₛ = 16.67µs; while the DwPTS comprises 4 downlink symbols employing the CP with 512*T*ₛ =16.67µs; herein, *T_{UpPTS}* = 15360 *Tₛ* = 0.5*ms*, *T_{DwPTS}* = 10240*Tₛ* = 333.33µs.

### Example 2

Fig.5 shows a similar example, except for the Short-PRACH being arranged at a different position in the UpPTS, thus the description for the same or similar parts will be omitted.

When a cell is a small coverage one (it is assumed that a cell with a radius less than 5 km is a small coverage cell), in the cases of both the Extended CP and the Normal CP, the Short-PRACH has the same duration of *T_{RA}* = 5120*Tₛ* = 166.67µs, and the Short-PRACH occupies the front 5120 *Tₛ* = 166.67µs of the UpPTS. Wherein, the time length of the preamble, *T_{PRE}*, is 4096*T*ₛ = 133.33µs, the time length of the GT, *T_{GT}*, is 1024*T*ₛ = 33.34µs, and *T_{PRE-CP}* = 0, i.e., the preamble has no CP.

### System Embodiments

According to an embodiment of the present invention, a transmitting system for the Short-PRACH based on the TDD system is provided for transmitting the Short-PRACH signal of small coverage cell, wherein an uplink special time slot exits in the time division duplex system, and the uplink special time slot may be used for bearing the short physical random access channel.

As shown in Fig.6, the transmitting system for the Short-PRACH based on the TDD system according to an embodiment of the present invention comprises a setting module 602 and a transmitting module 604.

Wherein, the setting module 602 is configured to set the duration of the Short-PRACH, in particular, the setting module 602 sets the duration of the Short-PRACH, *T_{RA}*, to be the same in case of the UpPTS employing a Normal CP or an Extended CP; the transmitting module 604 is configured to transmit the Short-PRACH on the UpPTS, preferably, the transmitting module 604 connects with the setting module 602.

Preferably, the setting module 602 sets the duration of the Short-PRACH, *T_{RA}*, equal to the sum of the duration of the preamble, *T_{PRE}*, the duration of CP attached to the preamble, *T*_{*PRE*-*CP*}, and the duration of the GT, *T_{GT}*, i.e., *T_{RA}* = *T*_{*PRE*-*CP*} + *T_{PRE}* + *T_{GT}* (as shown in Fig.3); wherein *T_{PRE-CP}* may be 0, i.e., the preamble does not have to attach a CP.

Preferably, the setting module 602 sets *T_{PRE}* to be the same in case of the UpPTS employing the Normal CP or the Extended CP, and sets *T_{GT}* to be also the same in case of the UpPTS employing the Normal CP or the Extended CP.

Further preferably, the setting module 602 sets the sum of the duration of the DwPTS, *T_{DwPTS}*, the duration of the UpPTS, *T_{UpPTS}*, and the duration of the GP, *T_{GP}*, to be 1ms, i.e., *T_{DwPTS}* + *T_{UpPTS}* + *T_{GP}* = 1*ms*, and sets the duration of the Short-PRACH, *T_{RA}*, to be not more than the duration of the UpPTS, *T_{UpPTS}*.

As discussed above, through the technical scheme of the present invention, by making the duration of the Short-PRACH irrelevant to the extended/normal CP of the UpPTS, that is to say, the design of the Short-PRACH keeps consistent and the position of it keeps fixed without varying with the change of the duration of the UpPTS, the reliability of the Short-PRACH can be improved and detection can be facilitated; in addition, the terminal does not need any additional time advance of the Short-PRACH thereafter, thus the resource preceding the Short-PRACH is not required to be idle, therefore the complexity for random access and the overhead can be reduced.

Above description is only to illustrate the preferred embodiments but not to limit the present invention. Various alterations and changes to the present invention are apparent to those skilled in the art. The scope of protection is defined by the claims.

## Claims

1. A transmitting method for a short physical random access channel based on a time division duplex system, wherein an uplink special time slot exists in the time division duplex system, and the uplink special time slot may be used for bearing the short physical random access channel, **characterized in that**,
the short physical random access channel is transmitted on the uplink special time slot, and the durations of the short physical random access channel are made to be the same in case of the uplink special time slot employing a normal cyclic prefix or an extended cyclic prefix.

2. The method according to Claim 1, **characterized in that** the operation making the durations of the short physical random access channel the same in case of the uplink special channel employing a normal cyclic prefix or an extended cyclic prefix comprises:
making the duration of the short physical random access channel equal to the sum of the duration of a preamble, the duration of cyclic prefix attached to the preamble, and guard time, wherein in the case that the preamble does not have attached cyclic prefix, the duration of the cyclic prefix attached to the preamble is 0.

3. The method according to Claim 2, **characterized in that** the durations of the preamble are equal no matter the uplink special time slot employs the normal cyclic prefix or the extended cyclic prefix, and the durations of the guard time are also equal no matter the uplink special time slot employs the normal cyclic prefix or the extended cyclic prefix.

4. The method according to Claim 2, **characterized in that** the sum of the duration of a downlink special time slot, the duration of the uplink special time slot, and the duration of a guard period is 1ms.

5. The method according to Claim 2, **characterized in that** the duration of the short physical random access channel is not more than the duration of the uplink special time slot.

6. A transmitting system for a short physical random access channel based on a time division duplex system, wherein an uplink special time slot exists in the time division duplex system, and the uplink special time slot may be used for bearing the short physical random access channel, **characterized in that** the transmitting system for the short physical random access channel comprises:
a setting module (602), configured to set the duration of the short physical random access channel, wherein the setting module (602) sets the durations of the short physical random access channel to be the same in case of the uplink special time slot employing a normal cyclic prefix or an extended cyclic prefix;
a transmitting module (604), configured to transmit the short physical random access channel on the uplink special time slot.

7. The system according to Claim 6, **characterized in that** the setting module (602) is configured to set the duration of the short physical random access channel equal to the sum of the duration of a preamble, the duration of cyclic prefix attached to the preamble, and guard time, wherein in the case that the preamble does not have attached cyclic prefix, the duration of the cyclic prefix attached to the preamble is 0.

8. The system according to Claim 7, **characterized in that** the setting module (602) is further configured to set the durations of the preamble to be equal no matter the uplink special time slot employs the normal cyclic prefix or the extended cyclic prefix, and sets the durations of the guard time to be also equal no matter the uplink special time slot employs the normal cyclic prefix or the extended cyclic prefix.

9. The system according to Claim 7, **characterized in that** the setting module (602) is further configured to set the sum of the duration of a downlink special time slot, the duration of the uplink special time slot, and the duration of a guard period to be 1ms.

10. The system according to Claim 7, **characterized in that** the setting module (602) is further configured to set the duration of the short physical random access channel not more than the duration of the uplink special time slot.

## Patentansprüche

1. Übertragungsverfahren für einen kurzen physischen Direktzugriffskanal auf der Basis eines Zeitduplexsystems, wobei ein spezielles Aufwärtsstrecken-Zeitfenster in dem Zeitduplexsystem existiert und das Aufwärtsstrecken-Zeitfenster zum Tragen des kurzen physischen Direktzugriffskanals verwendet werden kann, **dadurch gekennzeichnet, dass**
der kurze physische Direktzugriffskanal auf dem speziellen Aufwärtsstrecken-Zeitfenster übertragen wird, und die Dauer des kurzen physischen Direktzugriffskanals gleich der wie im Fall des speziellen Aufwärtsstrecken-Zeitfensters, das ein normales zyklisches Präfix oder ein erweitertes zyklisches Präfix anwendet, gemacht wird.

2. Verfahren nach Anspruch 1, **dadurch gekennzeichnet, dass** der Vorgang, bei dem die Dauer des kurzen physischen Direktzugriffskanals gleich der Dauer im Fall des speziellen Aufwärtsstreckenkanals, der ein normales zyklisches Präfix oder ein erweitertes zyklisches Präfix anwendet, gemacht wird, Folgendes umfasst:
die Dauer des kurzen physischen Direktzugriffskanals wird gleich der Summe der Dauer einer Präambel, der Dauer von dem mit der Präambel verbundenen zyklischen Präfix und dem Schutzintervall gemacht, wobei, falls die Präambel kein verbundenes zyklisches Präfix hat, die Dauer des mit der Präambel verbundenen zyklischen Präfix 0 ist.

3. Verfahren nach Anspruch 2, **dadurch gekennzeichnet, dass** die Dauer der Präambel gleich ist, egal ob das spezielle Aufwärtsstrecken-Zeitfenster das normale zyklische Präfix oder das erweiterte zyklische Präfix anwendet, und die Dauer des Schutzintervalls ebenfalls gleich ist, egal ob das spezielle Aufwärtsstrecken-Zeitfenster das normale zyklische Präfix oder das erweiterte zyklische Präfix anwendet.

4. Verfahren nach Anspruch 2, **dadurch gekennzeichnet, dass** die Summe der Dauer eines speziellen Abwärtsstrecken-Zeitfensters, die Dauer des speziellen Aufwärtsstrecken-Zeitfensters und die Dauer eines Schutzintervalls 1 ms ist.

5. Verfahren nach Anspruch 2, **dadurch gekennzeichnet, dass** die Dauer des kurzen physischen Direktzugriffskanals nicht mehr als die Dauer des speziellen Aufwärtsstrecken-Zeitfensters ist.

6. Übertragungssystem für einen kurzen physischen Direktzugriffskanal auf der Basis eines Zeitduplexsystems, wobei ein spezielles Aufwärtsstrecken-Zeitfenster in dem Zeitduplexsystem existiert und das spezielle Aufwärtsstrecken-Zeitfenster zum Tragen des kurzen physischen Direktzugriffskanals verwendet werden kann, **dadurch gekennzeichnet, dass** das Übertragungssystem für den kurzen physischen Direktzugriffskanal Folgendes umfasst:
ein Einstellungsmodul (602), konfiguriert zum Einstellen der Dauer des kurzen physischen Direktzugriffskanals, wobei das Einstellungsmodul (602) die Dauer des kurzen physischen Direktzugriffskanals gleich einstellt, falls das spezielle Aufwärtsstrecken-Zeitfenster ein normales zyklisches Präfix oder ein erweitertes zyklisches Präfix anwendet;
ein Übertragungsmodul (604), konfiguriert zum Übertragen des kurzen physischen Direktzugriffskanals auf dem speziellen Aufwärtsstrecken-Zeitfenster.

7. System nach Anspruch 6, **dadurch gekennzeichnet, dass** das Einstellungsmodul (602) konfiguriert ist, um die Dauer des kurzen physischen Direktzugriffskanals gleich der Summe der Dauer einer Präambel, der Dauer eines mit der Präambel verbundenen zyklischen Präfix und eines Schutzintervalls einzustellen, wobei, falls mit der Präambel kein zyklisches Präfix verbunden ist, die Dauer des mit der Präambel verbundenen zyklischen Präfix 0 ist.

8. System nach Anspruch 7, **dadurch gekennzeichnet, dass** das Einstellungsmodul (602) ferner konfiguriert ist, um die Dauer der Präambel gleich einzustellen, egal ob das spezielle Aufwärtsstrecken-Zeitfenster das normale zyklische Präfix oder das erweiterte zyklische Präfix anwendet und die Dauer des Schutzintervalls ebenfalls gleich einzustellen, egal ob das spezielle Aufwärtsstrecken-Zeitfenster das normale zyklische Präfix oder das erweiterte zyklische Präfix anwendet.

9. System nach Anspruch 7, **dadurch gekennzeichnet, dass** das Einstellungsmodul (602) ferner konfiguriert ist, um die Summe der Dauer eines speziellen Abwärtsstrecken-Zeitfensters, die Dauer des speziellen Aufwärtsstrecken-Zeitfensters und die Dauer eines Schutzintervalls auf 1 ms einzustellen.

10. System nach Anspruch 7, **dadurch gekennzeichnet, dass** das Einstellungsmodul (602) ferner konfiguriert ist, um die Dauer des kurzen physischen Direktzugriffskanals auf nicht mehr als die Dauer des speziellen Aufwärtsstrecken-Zeitfensters einzustellen.

## Revendications

1. Procédé de transmission pour un canal physique court d'accès aléatoire basé sur un système de duplexage par répartition dans le temps, dans lequel un intervalle de temps spécial à liaison ascendante existe dans le système de duplexage par répartition dans le temps, et l'intervalle de temps spécial à liaison ascendante peut être utilisé pour porter le canal physique court d'accès aléatoire, **caractérisé en ce que**
le canal physique court d'accès aléatoire est transmis sur l'intervalle de temps spécial à liaison ascendante, et les durées du canal physique court d'accès aléatoire sont amenées à être identiques dans le cas de l'intervalle de temps spécial à liaison ascendante employant un préfixe cyclique normal ou un préfixe cyclique étendu.

2. Procédé selon la revendication 1, **caractérisé en ce que** le fonctionnement rendant les durées du canal physique court d'accès aléatoire identiques dans le cas du canal spécial à liaison ascendante employant un préfixe cyclique normal ou un préfixe cyclique étendu comprend :
le fait de rendre la durée du canal physique court d'accès aléatoire égale à la somme de la durée d'un préambule, de la durée de préfixe cyclique attaché au préambule et d'un temps de garde, dans lequel, dans le cas où le préambule n'a pas de préfixe cyclique attaché, la durée du préfixe cyclique attaché au préambule est de 0

3. Procédé selon la revendication 2, **caractérisé en ce que** les durées du préambule sont égales que l'intervalle de temps spécial à liaison ascendante emploie le préfixe cyclique normal ou le préfixe cyclique étendu, et les durées du temps de garde sont également égales que l'intervalle de temps spécial à liaison ascendante emploie le préfixe cyclique normal ou le préfixe cyclique étendu.

4. Procédé selon la revendication 2, **caractérisé en ce que** la somme de la durée d'un intervalle de temps spécial à liaison descendante, de la durée de l'intervalle de temps spécial à liaison ascendante et de la durée d'une période de garde est de 1 ms.

5. Procédé selon la revendication 2, **caractérisé en ce que** la durée du canal physique court d'accès aléatoire n'est pas supérieure à la durée de l'intervalle de temps spécial à liaison ascendante.

6. Système de transmission pour un canal physique court d'accès aléatoire basé sur un système de duplexage par répartition dans le temps, dans lequel un intervalle de temps spécial à liaison ascendante existe dans le système de duplexage par répartition dans le temps, et l'intervalle de temps spécial à liaison ascendante peut être utilisé pour porter le canal physique court d'accès aléatoire, **caractérisé en ce que** le système de transmission pour le canal physique court d'accès aléatoire comprend :
un module de réglage (602), configuré pour régler la durée du canal physique court d'accès aléatoire, dans lequel le module de réglage (602) règle les durées du canal physique court d'accès aléatoire pour qu'elles soient identiques dans le cas de l'intervalle de temps spécial à liaison ascendante employant un préfixe cyclique normal ou un préfixe cyclique étendu ;
un module de transmission (604), configuré pour transmettre le canal physique court d'accès aléatoire sur l'intervalle de temps spécial à liaison ascendante.

7. Procédé selon la revendication 6, **caractérisé en ce que** le module de réglage (602) est configuré pour régler la durée du canal physique court d'accès aléatoire égale à la somme de la durée d'un préambule, de la durée de préfixe cyclique attaché au préambule et d'un temps de garde, dans lequel, dans le cas où le préambule n'a pas de préfixe cyclique attaché, la durée du préfixe cyclique attaché au préambule est de 0.

8. Procédé selon la revendication 7, **caractérisé en ce que** le module de réglage (602) est en outre configuré pour régler les durées du préambule pour qu'elles soient égales que l'intervalle de temps spécial à liaison ascendante emploie le préfixe cyclique normal ou le préfixe cyclique étendu, et règle les durées du temps de garde pour qu'elles soient également égales que l'intervalle de temps spécial à liaison ascendante emploie le préfixe cyclique normal ou le préfixe cyclique étendu.

9. Procédé selon la revendication 7, **caractérisé en ce que** le module de réglage (602) est en outre configuré pour régler la somme de la durée d'un intervalle de temps spécial à liaison descendante, de la durée de l'intervalle de temps spécial à liaison ascendante et de la durée d'une période de garde pour qu'elle soit de 1 ms.

10. Procédé selon la revendication 7, **caractérisé en ce que** le module de réglage (602) est en outre configuré pour régler la durée du canal physique court d'accès aléatoire à pas plus de la durée de l'intervalle de temps spécial à liaison ascendante.
